# EUROPEAN PATENT APPLICATION

(11) **EP 2 775 643 A1**
(43) Date of publication of application: **10.09.2014**
(21) Application number: 13158463.3
(22) Date of filing: 08.03.2013
(51) Int. Cl.: H04J 14/02

(54) **High density wavelength division multiplexing passive optical network**

(71) Applicant: Rigas Tehniska universitate, Riga 1658 (LV)
(72) Inventor: Bobrovs, Vjaceslavs, 3416 Liepãja (LV); Ivanovs, irts, 1009 Riga (LV); Porins, Jurgis, 1011 Riga (LV)
(74) Representative: Fortuna, Jevgenijs

(57) **Abstract**

The invention relates to a high density wavelength division multiplexing passive optical network (HDWDM-PON) comprising optically connected: at least one optical line terminal (OLT), at least one optical distribution network (ODN) and at least one optical network unit (ONU), wherein OLT comprises two arrayed waveguide gratings (AWG) with Gaussian amplitude square transfer function and equal bandwidths; at least one transmitter optically connected to the AWG, wherein the channel interval Δλ between adjacent channels central wavelengths of the transmitter's light source is 0.3 nm or lower; at least one receiver optically connected to the AWG with Gaussian amplitude square transfer function and equal bandwidths; a superluminescent light emitting diode (SLED), being optically connected to a splitter, which is optically connected to the AWG being connected to at least transmitter; the splitter is being optically connected to an optical circulator; the circulator also is being optically connected with the AWG being connected to at least one receiver. The circulator is being optically connected with the ODN by means of standard single mode fibre (SSMF); the SSMF being connected with another arrayed waveguide grating (AWG) with Gaussian amplitude square transfer function and equal bandwidths, which is being connected with at least one ONU, comprising C band and L band splitting filter (BS) optically connected to a reflective semiconductor amplifier (RSOA) and receiver.

## Description

### Technical Field

The invention generally relates to an optical communication network and is directed to an upgradeable passive optical network (PON) enabling high speed communication. The invention more specifically relates to a PON which uses a high density wavelength division multiplexing (HDWDM) transmission scheme.

### Background Art

Nowadays, an exponential growth is observed worldwide in the bit rates of transmitted information, which is associated with development of broadband information transmission types. This arise need for novel and upgradable solution in access networks. The most important aspect is to have gradual bandwidth increase for each individual user.

Thanks to achievements in optical technology the single channel transmission speed has been increased greatly in backbone networks. The development of dispersion compensator, optical amplifier and low loss optical fibre has leaded to dense wavelength division multiplexing systems with greater number of data channels by using all available bandwidth of single mode fibre. These technological developments lead to great improvement for capacity in backbone networks. Users at the client side have increasing requirements for high definition online movies and online games which results in a problem for access networks. For this problem many solutions have been provided until now.

F. Payoux et al in an article "Gigabit Optical Access using WDM-PON based on Spectrum Slicing and Reflective SOA" propose to adopt the bidirectional wavelength division multiplexing (WDM)-PON architecture with a polarisation insensitive reflective semiconductor amplifier (RSOA) at the optical network unit (ONU), operating at 1.25 Gbit/s. A superluminescent light emitting diode (SLED) at the optical line terminal (OLT) is used to provide the amount of light required for 40 users. In this architecture the downstream signals are generated in the L band with dense WDM (DWDM) lasers at the central office with 100 GHz channel spacing. They are multiplexed on the transmission line and de-multiplexed in optical distribution network (ODN) for distribution to the corresponding ONU. A C/L band filter separates upstream and downstream wavelengths at the ONU. This future system has technical limitations due to downstream transmission speed and spectral efficiency of overall system. These numbers could be improved.

Q.T. Nguyen et al in an article "24 channels colourless WDM-PON with L-band 10 Gbit/s downstream and C-band 2.5 Gb/s upstream using multiple wavelengths seeding sources based on mode-locked lasers" demonstrated the feasibility of a cost-effective transmitter solution for high capacity WDM-PON. This solution is based on the use of reflective colourless components combined with the low-cost multiples wavelength seeding source. A total of 240 Gbit/s capacity for downstream are successfully transmitted error-free in a WDM-PON configuration with 25 km reach. This cost effective solution could be improved by increasing the number of users and thus the overall capacity.

There is known dense wavelength division multiplexing-passive optical network system utilizing self-injection locking of Fabry-Perot laser diodes (patent US7167649). The drawback of the known system is that OLT block includes one AWG and multiple CWDM multiplexors which results in large number of passive components needed for upstream and downstream channel separation. Also as a transmitter light sources Fabry-Perot laser diodes are used, which leads to wider bandwidth of downstream channel and limits increase of spectral efficiency in overall system. Another drawback is that the system includes two partial mirrors for partially feeding back signal, which results in multiple times reflections in trunk fibre and leads to possible wavelength dependent signal fading.

There is known self-injection optical transmitting and receiving module and wavelength division multiplexing passive optical network system (EP2482472). The drawback of the known system is limited possibility to symmetrically increase transmission speed for upstream and downstream channels due to non-equal bandwidths of AWGs used for upstream and downstream signals. Also OLT block in the module contains gain medium which can cause undesirable nonlinear influence from four wave mixing effect in case of increased number of channels.

There is known wavelength division multiplexer and passive optical network system (WO2012103847). The main drawback of the known system is that downstream channels are generated using RSOA. This leads to lower peak power and wider bandwidth of downstream channel and limits increase of spectral efficiency in overall system. Also the OLT block includes one AWG and multiple WDM multiplexors which results in large number of passive components needed for upstream and downstream channel separation. Furthermore the known system also includes two partial mirrors for partially feeding back signal, which results in multiple times reflections in trunk fibre and leads to possible wavelength dependent signal fading.

### Summary of the Invention

It is an object of the invention to propose a high bandwidth HDWDM-PON system with increased spectral efficiency. The increased spectral efficiency could provide more scalable use of available fibre bandwidth. Also the invention is directed to allow gradually increase a number of users, data speed per channel and number of downstream channels per user which could be necessary because of an increase of demand for higher bandwidth.

The proposed high density wavelength division multiplexing passive optical network (HDWDM-PON) comprising optically connected: at least one optical line terminal (OLT), at least one optical distribution network (ODN) and at least one optical network unit (ONU), wherein OLT comprises two arrayed waveguide gratings (AWG) with Gaussian amplitude square transfer function and equal bandwidths; at least one transmitter optically connected to the AWG, wherein the channel interval Δλ between adjacent channels central wavelengths of the transmitter's light source is 0.3 nm or lower; at least one receiver optically connected to the AWG with Gaussian amplitude square transfer function and equal bandwidths; a superluminescent light emitting diode (SLED), being optically connected to a splitter, which is optically connected to the AWG being connected to at least transmitter; the splitter is being optically connected to an optical circulator; the circulator also is being optically connected with the AWG being connected to at least one receiver. The circulator is being optically connected with the ODN by means of standard single mode fibre (SSMF); the SSMF being connected with another arrayed waveguide grating (AWG) with Gaussian amplitude square transfer function and same bandwidth as AWG in OLT, which is being connected with at least one ONU, comprising C band and L band splitting filter (BS) optically connected to a reflective semiconductor amplifier (RSOA) and receiver.

### Brief Description of Drawings

Fig. 1 shows a HDWDM-PON simplified block diagram illustrating the basic configuration of proposed system;
Fig. 2 shows channel spacing between adjacent channels in downstream;
Fig. 3 shows a basic transmitter configuration;
Fig. 4 shows a basic receiver configuration;
Fig. 5 shows upstream and downstream channel allocation on wavelength grid for the proposed HDWDM-PON solution;
Fig. 6 shows received spectrum at remote node and worst channel eye diagram at ONU of 16 channel HDWDM-PON solution.

### Detailed Description of the Invention

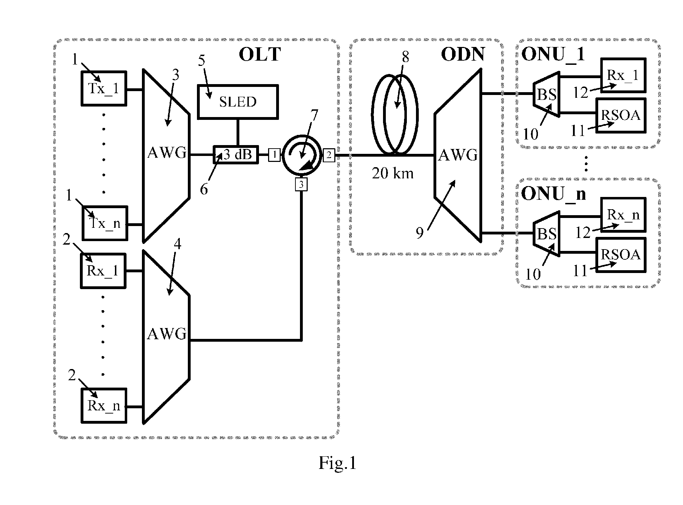

The simplified block diagram shown in Fig. 1 illustrates a high density wavelength division multiplexing passive optical network (HDWDM-PON) according to the invention. An optical line terminal (OLT) comprises multiple elements for transmitting and receiving the optical signals. The main OLT blocks are at least one transmitter 1, at least one receiver 2, two arrayed waveguide gratings (AWG) 3, 4 with Gaussian amplitude square transfer function and equal bandwidths and superluminescent light emitting diode (SLED) 5.

Each transmitter 1 is connected to one port of AWG 3. The number of transmitters could be increased up to 64 (in the embodiment shown in drawings there are 16 channels). The AWG 3 is used to separate different user downstream signals for appropriate transmission. Then AWG 3 is connected to splitter 6 (in this embodiment - 3 dB), which ensures also SLED 5 connectivity. SLED 5 is used as a broadband light source for upstream channel generation in each particular ONU. The splitter 6 is connected to the first port of an optical circulator 7. The optical circulator 7 is used to split upstream and downstream signals in OLT. The receivers 2 are connected to AWG 4. The AWG 4 is used to separate different user upstream signals for appropriate detection. Then AWG 4 is connected to the third port of the optical circulator 7. The optical line termination OLT is responsible for the "bandwidth" allocation for the downstream signals and for the synchronization of all ONU. The downstream signals carry the necessary timing information. The upstream bit rate is normally lower than the downstream bit rate, e.g. downstream 10 Gbit/s and upstream 1.25 Gbit/s.

The ODN network begins after optical circulators 7 second port to which standard single mode fibre (SSMF) (G.652.d) 8 is connected. In this embodiment the optical fibre length is 20 km which is typical length for access systems. The utilized fibre preferably has a large core effective area of 80 µm², attenuation α = 0.2 dB/km, nonlinear refractive coefficient nₖ = 2.5·10⁻²⁰ cm/W, and dispersion 16 ps/nm/km at the reference wavelength λ = 1550 nm. The used fibre is connected to AWG 9 with Gaussian amplitude square transfer function which is located at remote node. AWG 9 is used for fibre and data channel splitting to the different ONU.

The ONU comprising C band and L band splitting (BS) filter 10, RSOA 11 and receiver 12. The BS filter 10 is connected to the different output ports of AWG 9. BS filter 10 splits wavelengths which are in C band and L band. To the two output ports of BS filter 10 the RSOA 11 and the receiver 12 is connected. The RSOA 11 is used for upstream signal generation from the incoming light which is generated from SLED 5 at the OLT. The data rate for upstream is 1.25 Gbit/s. The receiver 12 is used for downstream data demodulation.

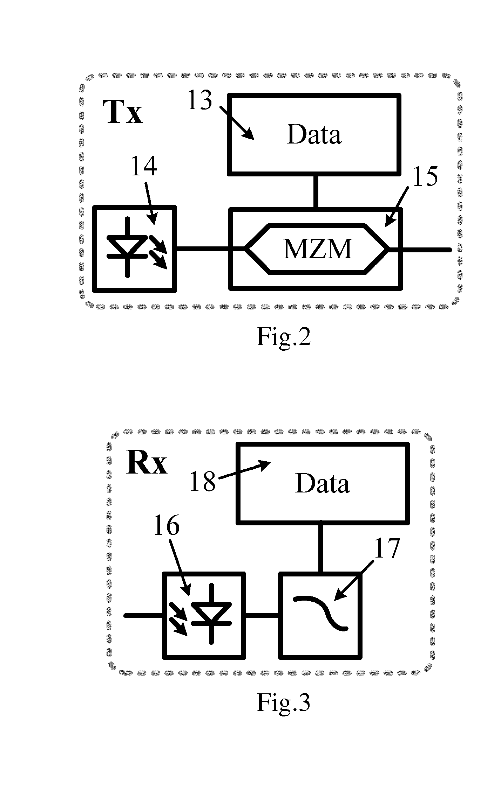

The basic configuration of the transmitter 1 for HDWDM-PON solution is shown on Fig.2. It contains data source 13, a continuous laser 14 and an external optical modulator 15. The data source 13 can provide a frequency from 100 MHz to 12.5 GHz. The continuous laser 14 is a distributed feedback laser. The output optical signal has a non-return to zero on-off keying (NRZ OOK) modulation format. The external optical modulator 15 is a Mach Zehnder modulator based on LiNbO₃.

The basic configuration of the receiver 2 is shown in Fig. 3. It comprises PIN photodiode 16, an electrical filter 17 and data receiving interface 18. Optical signal to electrical is converted in PIN photodiode 16. The sensitivity level is up to -28 dBm. To reduce the noise for the converted electrical signal the Bessel Thomson 7.5 GHz 4 pole electrical low pass filter is applied.

The system shown in Fig 1-3 operates as follows. The downstream channels are generated in the transmitter(s) 1. The electrical signal is generated in the data source 13 from transmitting data interface. Then generated data is sent to the high frequency input port of the external Mach Zehnder modulator 15 (e.g. through coaxial cable). The light for downstream channels is generated in distributed feedback laser 14 which operates in continuous regime. The generated light has high output peak power and narrow spectral full width half maximum bandwidth. The light from continuous laser 14 is sent to optical input port of the external Mach Zehnder modulator 15 where it is splitted in two equal parts. One part of the splitted signal is modulated in the LiNbO3 crystal (to achieve phase change by 180 degrees). The other part is sent through without modulation of the phase. At the output of the external Mach Zehnder modulator 15 the two parts are combined together. Because of the change in the phase in one part of the signal constructive or destructive interference occurs. In this process a non-return to zero on-off keying (NRZ OOK) modulation format is obtained. Then modulated optical signal is sent to appropriate input on the downstream AWG 3. The downstream channels are filtered to remove imperfections caused by modulation and combined to the output port of the AWG 3.

After that all modulated channels (in the L band) are sent through the (3 dB) splitter 6 in which light from SLED 5 is added on the C band. Then all downstream channels in L band and light for upstream channels in C band are sent to the first port of the optical circulator 7. The optical circulator 7 is used to slit directions. One direction is from port one to port two which is used to couple the downstream channels and light for the upstream channel in the standard single mode fibre (SSMF) (G.652.d) 8. The second direction is from port two to port three which is used to couple upstream channels from standard single mode fibre (SSMF) (G.652.d) 8 to the upstream AWG 4.

Coupled downstream channels and light for upstream channel generation propagates through SSMF 8 (e.g. 20 km). Then light is sent to AWG 9 which filters (by wavelength) appropriate downstream channel and light used for upstream channel to appropriate ONU thanks to periodic complex transfer function. BS 10 in each ONU is used to split C band from L band. After the BS 10 appropriate downstream channel is sent to receiver 12 where it is converted from optical signal to electrical signal using PIN photodiode 16 and filtered in the electrical filter 17 which decreases the noise level. Then it is sent to receiving data interface 18.

The light for upstream signal generation after BS 10 is sent to the reflective semiconductor amplifier (RSOA) 11. Then it is modulated and reflected back in the opposite direction. Through BS 10 appropriate channel is sent to the AWG 9 where it is combined with other upstream channels and then coupled in to the SSMF 8. Subsequently after propagation through the optical circulator 7 all upstream channels are sent to the AWG 4 where they are splitted to the appropriate receiver 2. The appropriate upstream channel is converted from optical signal to electrical signal using PIN photodiode 16 and filtered in the electrical filter 17 which decreases the noise level. Then it is sent to the receiving data interface 18.

To maximize the PON capacity, the system's design and optimization have to take into account a number of the impacting factors - the channel data rate, transmission distance, signal optical power, fibre linear and nonlinear effects, and, of course, the channel interval. In a HDWDM technology the last factor is the most important for a high-quality solution. In order to maximize the system capacity and to minimize the performance degradation caused by transmission impairments, the system investigation and optimization are very important.

Currently, much research in optical communications is focused on increasing the total bit rate of an individual optical fibre. Most of the research works are grounded on novel modulation schemes for concrete wavelengths. An alternative - though equally valid - approach to increasing the transmission capacity is to scale the WDM-PON downstream channel spacing to lowest possible dimensions while keeping the existing bit rate. The first advantage of the invention is the minimum allowed channel spacing for downstream channels in HDWDM-PON solution.

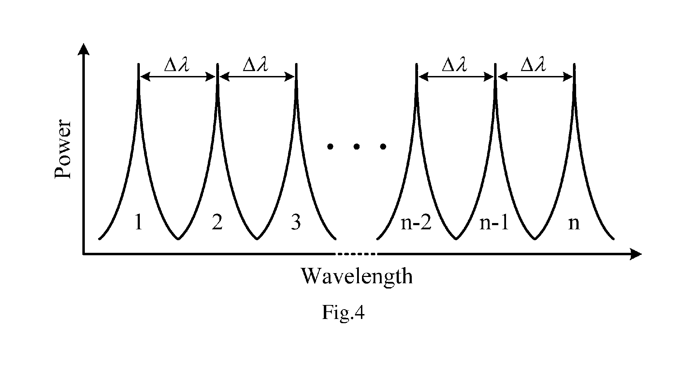

Fig. 4 shows the channel spacing allocation method for the downstream channels. In this case the HDWDM technology is applied to downstream channels. This allows for fibre bandwidth to be employed more efficiently and lead to the increase of spectral efficiency for overall HDWDM-PON solution. The experimental and simulation results indicate that for 10 Gbit/s HDWDM transmission the suitable channel interval Δλ between adjacent channels central wavelengths of the transmitter's light source has value 0.3 nm or lower.

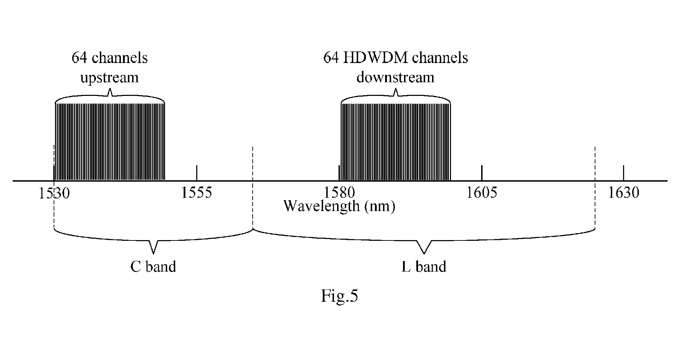

According to recommendations a wavelength band between 1530 nm and 1565 nm shall be used for upstream communication and a wavelength band between 1565 nm and 1625 nm shall be used for downstream communication as shown in Fig.5. The wavelength band for downstream communication is wider to ensure that even multiple channel could be assigned for single ONU. This concept has the potential to significantly reduce system power consumption and promises great network flexibility for expected and unexpected user demands by offering rate extendibility as well as user and service multiplexing. This gives a potential solution for future HDWDM-PON systems where will be multiple wavelengths assignment requests for each ONU rather than just one wavelength an in next generation PON.

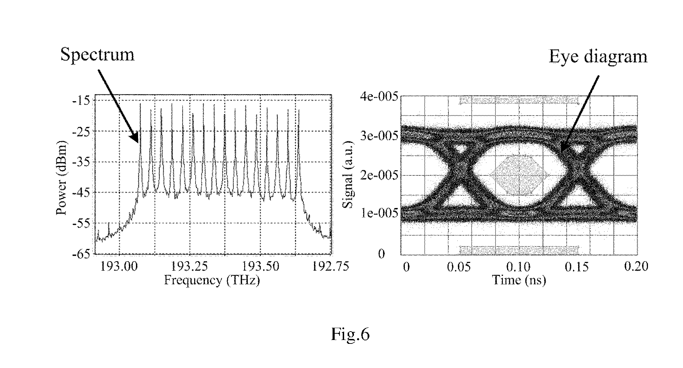

The Fig. 6 shows the received spectrum of 16 channel HDWDM-PON solution at the remote node and worst channel eye diagram after detection of 10 Gbit/s NRZ OOK optical signal at the ONU. The transmission speed of the downstream channel could be changed with the need of additional functionality. For the forward error correction (FEC) implementation it could be increased up to 12.5 Gbit/s. This could be used to ensure that transmission distance could be improved if it is necessary.

## Claims

1. A high density wavelength division multiplexing passive optical network (HDWDM-PON) comprising optically connected: at least one optical line terminal (OLT), at least one optical distribution network (ODN) and at least one optical network unit (ONU), wherein
- OLT comprises two arrayed waveguide gratings (AWG) (3, 4) with Gaussian amplitude square transfer function and equal bandwidths; at least one transmitter (1) optically connected to the AWG (3); at least one receiver (2) optically connected to the AWG (4); a superluminescent light emitting diode (SLED) (5), being optically connected to a splitter (6), which is optically connected to the AWG (3); the splitter (6) is being optically connected to an optical circulator (7); the circulator (7) also is being optically connected with AWG (4) and
- ODN by means of standard single mode fibre (SSMF) (8); the SSMF being connected with arrayed waveguide grating (AWG) (9), which is being connected with
- at least one ONU, comprising C band and L band splitting filter (BS) (10) optically connected to a reflective semiconductor amplifier (RSOA) (11) and receiver (12);
wherein the transmitter (1) comprises data source (13), continuous laser (14) being a distributed feedback laser and external optical modulator (15), preferably being the Mach Zehnder modulator; the modulator (15) being optically connected with laser (14) and electrically connected with data source (13); where the channel interval Δλ between adjacent channels central wavelengths of the transmitter's (1) light source (14) is 0.3 nm or lower;
wherein the receiver (2, 12) comprises PIN photodiode (16) optically connected with electrical filter (17), preferably being Bessel Thomson electrical low pass filter; and data receiving interface (18) being electrically connected with filter (17).
